(19) Europäisches Patentamt
European Patent Office
Office européen des brevets

(11) **EP 1 153 814 A1**

(12) **EUROPÄISCHE PATENTANMELDUNG**

(43) Veröffentlichungstag:
**14.11.2001 Patentblatt 2001/46**

(51) Int Cl.⁷: **B60T 8/00**, B60T 7/10,
B60T 13/74

(21) Anmeldenummer: **01108681.6**

(22) Anmeldetag: **06.04.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **10.05.2000 DE 10022557**

(71) Anmelder: **Continental Teves AG & Co. oHG**
**60488 Frankfurt am Main (DE)**

(72) Erfinder: **Drumm, Stefan A.**
**55291 Saulheim (DE)**

(54) **Verfahren zur Bremskraftregelung an einem Kraftfahrzeug**

(57) Die Erfindung betrifft ein Verfahren zur Bremskraftregelung an zumindest einem Rad (2, 3, 7, 8) eines Kraftfahrzeuges, insbesondere bei Kurvenfahrt mit zumindest eine erste Achse (4) mit ungebremsten Rädern (2, 3) sowie eine zweiten Achse (5) mit gebremsten Rädern (7, 8). Dabei werden zunächst die Ist-Raddrehzahlen ($\omega_{VL}$, $\omega_{VR}$) an den ungebremsten Rädern (2, 3) der ersten Achse (4) erfaßt, um daraus innerhalb einer Steuervorrichtung (9) entsprechende Soll-Raddrehzahlen ($\omega_{HL}$, $\omega_{HR}$) an den gebremsten Rädern (7, 8) der zweiten Achse (5) gemäß einer vorgegebenen Rechenanweisung abzuleiten. Nach Bestimmung des Radschlupfes an den gebremsten Rädern (7, 8) der zweiten Achse (5) erfolgt durch die Steuervorrichtung (9) eine blockadefreie Beaufschlagung der gebremsten Räder (7, 8) der zweiten Achse (5) mit einer Bremskraft unter Berücksichtigung der Soll-Raddrehzahlen ($\omega_{HL}$, $\omega_{HR}$) sowie des Radschlupfes an den gebremsten Rädern (7, 8). Das genannte Verfahren eignet sich damit unabhängig vom Streckenverlauf vorteilhaft auch zur Anwendung bei Feststellbremsungen während der Fahrt.

Fig. 1

EP 1 153 814 A1

**Beschreibung**

Die vorliegende Erfindung betrifft ein Verfahren zur Bremskraftregelung an einem Kraftfahrzeug mit mehreren Achsen, das insbesondere bei Kurvenfahrt wirksam ist.

Aus der EP-A-0 872 393 ist ein Verfahren zur Bremsdruckregelung an den Rädern zumindest einer Achse eines Kraftfahrzeuges bekannt. Dabei werden die Raddrehzahlen von zumindest einer Sensorvorrichtung erfaßt und einer Auswerteeinheit zugeleitet, um daraus Stellsignale für Aktuatoren zur Einstellung des Radbremsdruckes an den einzelnen Rädern zu bilden. Zur Berücksichtigung von Kurvenfahrten, wo Drehzahldifferenzen an den Rädern einer Achse auftreten, ist eine besondere Bremsdruckregelung erforderlich, um die Fahrstabilität des Kraftfahrzeuges aufrecht zu erhalten. In der genannten Offenlegungsschrift wird daher vorgeschlagen, eine Kurvenfahrt zu erkennen durch Auswertung von ermittelten Drehzahldifferenzen, von zeitlichen Veränderungen der Drehzaldifferenzen sowie der Differenz zwischen den Drehzahldifferenzen bezogen auf die Räder einer Achse. Bei erkannter Kurvenfahrt sollen dann entsprechende Stellsignale zur Bremsdruckregelung an den Rädern gebildet werden. Das hier gewählte Verfahren erfordert eine komplexe Auswerteeinheit und liefert zudem nicht bei allen Fahrzuständen einen blockadefreien Betrieb der Bremsen. Dies trifft insbesondere auf die Betätigung einer auf nur eine Fahrzeugachse wirkenden Feststellbremsanlage zu, wo es speziell bei Kurvenfahrt leicht zu einem Blokkieren der Räder einer Achse führen kann.

In der DE-A-196 33 835 wird ein Verfahren zur Steuerung einer Bremsanlage eines Kraftfahrzeuges beschrieben, das sowohl für Bremsungen mittels der Betriebsbremse als auch für Bremsungen mittels der Feststellbremse wirksam ist. Das genannte Verfahren bezieht sich jedoch auf die Bremsdruckregelung an allen Rädern und trägt zudem nicht allen Fahrzuständen angemessen Rechnung.

Es ist die Aufgabe der Erfindung, ein Verfahren zur blockadefreien Bremsdruckregelung anzugeben, das möglichst in allen Fahrzuständen sowie insbesondere bei Bremseinwirkung auf nur eine Fahrzeugachse sicher wirksam ist.

Gelöst wird die Aufgabe durch die Merkmalskombination des Patentanspruches 1. Danach werden zur Bremskraftregelung insbesondere bei Kurvenfahrt bei einem Kraftfahrzeug mit zumindest einer ersten Achse mit ungebremsten Rädern sowie einer zweiten Achse mit gebremsten Rädern die Ist-Raddrehzahlen an den ungebremsten Rädern der ersten Achse erfaßt, um daraus innerhalb einer Steuervorrichtung mittels mathematischer Zusammenhänge entsprechende Soll-Raddrehzahlen für die gebremsten Rädern der zweiten Achse abzuleiten. Durch Bestimmung sowie Berücksichtigung der Radschlupfwerte an den gebremsten Rädern kann somit eine blockadefreie Bremskraftbeaufschlagung der gebremsten Räder erfolgen. Dabei werden die abgeleiteten, bei Kurvenfahrt unterschiedlichen Soll-Raddrehzahlen mit den tatsächlichen Raddrehzahlen an der zweiten Achse verglichen. Daraus werden in der Steuervorrichtung Stellsignale für Radbremsen gebildet, die ein Blockieren der Räder an der gebremsten Achse verhindern. Unsichere Fahrzustände können somit vermieden werden. Das beschriebene Verfahren eignet sich damit auch für Feststellbremsanlagen, insbesondere elektrische Feststellbremsanlagen, die auch während der Fahrt betätigt werden können. Speziell bei elektrischen Feststellbremsanlagen ist aufgrund des Bedienelementes, z. B. Schalter, Taster etc., in der Regel eine schnelle manuelle Variation der Bremskraft nicht möglich, so daß für derartige Anordnungen eine elektronischer Blockierschutz erwünscht ist. Dabei ist zu berücksichtigen, daß die Soll-Raddrehzahlen der gebremsten Räder der zweiten Achse bei Kurvenfahrt unterschiedlich sind. Diese Soll-Raddrehzahlen werden nun ausgehend von den erfaßten Ist-Raddrehzahlen an den ungebremsten Rädern innerhalb der Steuervorrichtung rechnerisch ermittelt.

Ein besonders vorteilhaftes Verfahren zur Bremskraftregelung an zumindest einer Fahrzeugachse wird dadurch erreicht, daß die blockadefreie Bremskraftbeaufschlagung der gebremsten Räder derart bemessen ist, daß die Radschlupfwerte an den gebremsten Rädern einen vorgegebenen Grenzwert nicht überschreiten. Somit wird die abhängig von der Fahrbahnoberfläche maximal mögliche Verzögerungswirkung erreicht ohne die Fahrstabilität des Kraftfahrzeuges zu beeinträchtigen.

Das beschriebene Verfahren zur Bremskraftregelung läßt sich insbesondere auch bei Bremsungen einer elektrischen Feststellbremsanlage während der Fahrt anwenden. Solche reinen Feststellbremsungen wirken üblicherweise nur auf die Räder einer Achse, häufig auf die Räder der Hinterachse, wobei die Räder der Vorderachse ungebremst sind. Daher muß die Bremskraftregelung speziell bei Kurvenfahrt durch Berücksichtigung des Radschlupfes sowie der unterschiedlichen Soll-Raddrehzahlen an der gebremsten Achse diesem Umstand Rechnung tragen, um eine Überbremsen der Hinterachse zu vermeiden.

Zur mathematisch korrekten Beschreibung der Abrollkinematik aller Räder des Kraftfahrzeuges ist für das Verfahren zur Bremskraftregelung erfindungsgemäß vorgesehen, daß die Bestimmung der Soll-Raddrehzahlen $\omega_{HL}$, $\omega_{HR}$ an den gebremsten Rädern in Abhängigkeit von den Ist-Raddrehzahlen $\omega_{VL}$, $\omega_{VR}$ an den ungebremsten Rädern bzw. von Zwischengrößen $\omega_{VM}$, q, vom Radstand $r_S$ sowie der halben Spurweite $s_V$, $S_H$ an den entsprechenden Achsen innerhalb der Steuervorrichtung nach der Rechenanweisung

$$\omega_{HL} = \frac{1 + \sqrt{1 - q^2(1 + r_S^2/s_V^2)} - q\,\dfrac{s_H}{s_V}}{\sqrt{2 + 2\sqrt{1 - q^2(1 + r_S^2/s_V^2)}}}\,\omega_{VM}$$

$$\omega_{HR} = \frac{1 + \sqrt{1 - q^2(1 + r_S^2/s_V^2)} + q\,\dfrac{s_H}{s_V}}{\sqrt{2 + 2\sqrt{1 - q^2(1 + r_S^2/s_V^2)}}}\,\omega_{VM},$$

mit den Zwischengrößen

$$\omega_{FM} = \sqrt{\frac{\omega_{VR}^2 + \omega_{VL}^2}{2}}$$

und

$$q = \frac{\omega_{VR}^2 - \omega_{VL}^2}{\omega_{VR}^2 + \omega_{VL}^2}$$

erfolgt.

Damit kann sich das Verfahren zur Bremskraftregelung auf eine Erfassung der Ist-Raddrehzahlen an der ungebremsten Achse beschränken, um auf die Soll-Raddrehzahlen an der gebremsten Achse rückzuschließen. Hierbei beschreibt die halbe Spurweite $s_V$, $s_H$ den Abstand zwischen dem jeweiligen Rad und der Fahrzeugmittellinie und der Radstand $r_S$ beschreibt den Abstand zwischen den betrachteten Fahrzeugachsen. Zur eigentlichen Bestimmung der Soll-Raddrehzahlen an den gebremsten Rädern können die komplizierten Wurzelfunktionen in Abhängigkeit von der Zwischengröße q in der Steuervorrichtung direkt berechnet oder über eine Potenzreihe in q näherungsweise ermittelt werden. Alternativ können die Wurzelfunktionen in Abhängigkeit von q in einer in die Steuervorrichtung integrierten Tabelle bzw. einem Speicher abgelegt sein und zur Bestimmung der Soll-Raddrehzahlen jeweils genutzt werden.

Das beschriebene Verfahren läßt sich z. B. bei hydraulisch, elektrohydraulisch sowie elektrisch betätigten Bremsanlagen anwenden. Besonders geeignet ist das erfindungsgemäße Verfahren für die Anwendung bei Feststellbremsungen während der Fahrt, insbesondere bei Kurvenfahrt. Auch für derartige Anwendungen wird eine blockadefreie Abbremsung der jeweiligen Räder einer Achse erreicht.

Die einzige Zeichnung verdeutlicht die geometrischen Zusammenhänge zwischen den für die Ermittlung der Soll-Raddrehzahlen $\omega_{HL}$, $\omega_{HR}$ relevanten Parametern.

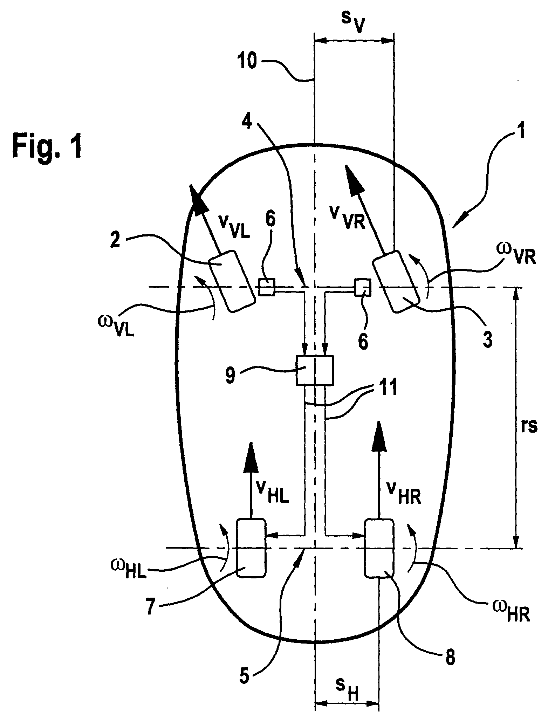

Figur 1 zeigt in ein Kraftfahrzeug 1 während der Fahrt in Prinzipdarstellung, für das bei einer Bremsung, insbesondere Feststellbremsung, die Vorderachse 4 ungebremst und die Hinterachse 5 gebremst ausgeführt ist. Dabei treten während der Fahrt an den einzelnen Rädern 2, 3, 7, 8 unter Umständen unterschiedliche translatorische Radgeschwindigkeiten $V_{VL}$, $V_{VR}$, $V_{HL}$, $V_{HR}$ auf. Zur Anwendung des oben beschriebenen Verfahrens zur Bremskraftregelung werden die Ist-Raddrehzahlen $\omega_{VL}$, $\omega_{VR}$ an den ungebremsten Rädern 2, 3 der ersten Achse 4 bzw. Vorderachse erfaßt. Dies geschieht beispielsweise durch Radsensoren 6. Aus den gemessenen Ist-Raddrehzahlen $\omega_{VL}$, $\omega_{VR}$ werden innerhalb einer Steuervorrichtung 9 nach der oben genannten Rechenanweisung die Soll-Raddrehzahlen $\omega_{HL}$, $\omega_{HR}$ bestimmt. Im Rahmen der Bestimmung der Soll-Raddrehzahlen $\omega_{HL}$, $\omega_{HR}$ werden die Fahrzeugparameter Radstand $r_S$ und halbe Spurweite $s_V$, $S_H$ der jeweiligen Achse berücksichtigt, wobei der Radstand $r_S$ den Abstand der Achsen 4, 5 und die halbe Spurweite $s_V$, $s_H$ für Vorder- und Hinterachse den Abstand des Rades 2, 3, 7, 8 zur Fahrzeugmittelachse 10 angibt.

In der Steuervorrichtung 9 werden aus den Soll-Raddrehzahlen $\omega_{HL}$, $\omega_{HR}$ unter Berücksichtung der Radschlupfwerte an der Hinterachse 5 Signale 11 zur blockadefreien Bremskraftbeaufschlagung der gebremsten Räder 7, 8 der Hinterachse 5 generiert. Dabei kann die Bremsintensität an den beiden Hinterrädern 7, 8 nach dem Select-Low-Verfahren gleichzeitig moduliert werden, wobei der Radschlupf an diesen beiden Rädern 7, 8 unterhalb eines vorgegebenen Grenzwertes gehalten wird.

**Patentansprüche**

1. Verfahren zur Bremskraftregelung an zumindest einem Rad eines Kraftfahrzeuges, insbesondere bei Kurvenfahrt, **gekennzeichnet durch**

   - zumindest eine erste Achse (4) mit ungebremsten Rädern (2, 3) sowie eine zweiten Achse (5) mit gebremsten Rädern (7, 8);
   - eine Erfassung der Ist-Raddrehzahlen ($\omega_{VL}$, $\omega_{VR}$) an den ungebremsten Rädern (2, 3) der ersten Achse (4) zur Ableitung von entsprechenden Soll-Raddrehzahlen ($\omega_{HL}$, $\omega_{HR}$) an den gebremsten Rädern (7, 8) der zweiten Achse (5) innerhalb einer Steuervorrichtung (9);
   - Bestimmung des Radschlupfes an den gebremsten Rädern (7, 8) der zweiten Achse (5);
   - blockadefreie Beaufschlagung der gebremsten Räder (7, 8) der zweiten Achse (5) mit einer Bremskraft **durch** die Steuervorrichtung (9) unter Berücksichtigung der Soll-Raddrehzahlen ($\omega_{HL}$, $\omega_{HR}$) sowie des Radschlupfes an den gebremsten Rädern (7, 8).

2. Verfahren zur Bremskraftregelung nach Anspruch 1, **dadurch gekennzeichnet, daß** die blockadefreie Bremskraftbeaufschlagung der gebremsten Räder (7, 8) derart bemessen ist, daß die Radschlupfwerte an den gebremsten Rädern (7, 8) einen vorgegebenen Grenzwert nicht überschreiten.

3. Verfahren zur Bremskraftregelung nach einem der vorhergehenden Ansprüche, **dadurch gekennzeichnet, daß** das Verfahren für Bremsungen einer elektrischen Feststellbremsanlage während der Fahrt angewendet wird.

4. Verfahren zur Bremskraftregelung nach einem der vorhergehenden Ansprüche, **dadurch gekennzeichnet, daß** die gebremsten Räder (7, 8) an der Hinterachse (5) eines Kraftfahrzeuges angeordnet sind.

5. Verfahren zur Bremskraftregelung nach einem der vorhergehenden Ansprüche, **dadurch gekennzeichnet, daß** die Bestimmung der Soll-Raddrehzahlen ($\omega_{HL}$, $\omega_{HR}$) an den gebremsten Rädern (7, 8) in Abhängigkeit von den Ist-Raddrehzahlen ($\omega_{VL}$, $\omega_{VR}$) an den ungebremsten Rädern (2, 3) bzw. von Zwischengrößen $\omega_{VM}$, q, vom Radstand ($r_S$) sowie der halben Spurweite ($s_V$, $s_H$) an den entsprechenden Achsen (4, 5) innerhalb der Steuervorrichtung (9) nach dem Zusammenhang

$$\omega_{HL} = \frac{1 + \sqrt{1 - q^2(1 + r_S{}^2/s_V{}^2)} - q\dfrac{s_H}{s_V}}{\sqrt{2 + 2\sqrt{1 - q^2(1 + r_S{}^2/s_V{}^2)}}}\omega_{VM}$$

$$\omega_{HR} = \frac{1 + \sqrt{1 - q^2(1 + r_S{}^2/s_V{}^2)} + q\dfrac{s_H}{s_V}}{\sqrt{2 + 2\sqrt{1 - q^2(1 + r_S{}^2/s_V{}^2)}}}\omega_{VM},$$

mit

$$\omega_{VM} = \sqrt{\frac{\omega_{VR}{}^2 + \omega_{VL}{}^2}{2}}$$

und

$$q = \frac{\omega_{VR}{}^2 - \omega_{VL}{}^2}{\omega_{VR}{}^2 + \omega_{VL}{}^2}$$

erfolgt.

**Fig. 1**

# EP 1 153 814 A1

**Europäisches Patentamt**    **EUROPÄISCHER RECHERCHENBERICHT**

Nummer der Anmeldung

EP 01 10 8681

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | EP 0 872 393 A (VOLKSWAGENWERK AG) 21. Oktober 1998 (1998-10-21) * Zusammenfassung * --- | 1 | B60T8/00 B60T7/10 B60T13/74 |
| A | EP 0 293 561 A (TEVES GMBH ALFRED) 7. Dezember 1988 (1988-12-07) * Spalte 5, Zeile 25 - Spalte 8, Zeile 3; Abbildungen 1,2 * --- | 1,5 | |
| A | DE 198 36 687 A (ITT MFG ENTERPRISES INC) 12. August 1999 (1999-08-12) * Spalte 7, Zeile 12 - Zeile 39 * --- | 1 | |
| P,A | DE 199 35 999 A (SIEMENS AG) 8. Februar 2001 (2001-02-08) * Spalte 4, Zeile 5 - Zeile 10 * * Spalte 4, Zeile 31 - Zeile 44 * * Spalte 4, Zeile 66 - Spalte 5, Zeile 6 * ----- | 1 | |

**RECHERCHIERTE SACHGEBIETE (Int.Cl.7)**

B60T

Der vorliegende Recherchenbericht wurde für alle Patentansprüche erstellt

| Recherchenort | Abschlußdatum der Recherche | Prüfer |
|---|---|---|
| BERLIN | 18. Juli 2001 | Blurton, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 10 8681

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-07-2001

| Im Recherchenbericht angeführtes Patentdokument | | Datum der Veröffentlichung | Mitglied(er) der Patentfamilie | | Datum der Veröffentlichung |
|---|---|---|---|---|---|
| EP 0872393 | A | 21-10-1998 | KEINE | | |
| EP 0293561 | A | 07-12-1988 | DE | 3718421 A | 15-12-1988 |
| | | | DE | 3865095 A | 31-10-1991 |
| | | | JP | 2581758 B | 12-02-1997 |
| | | | JP | 63312259 A | 20-12-1988 |
| | | | US | 4844557 A | 04-07-1989 |
| DE 19836687 | A | 12-08-1999 | WO | 9939951 A | 12-08-1999 |
| | | | EP | 1053149 A | 22-11-2000 |
| DE 19935999 | A | 08-02-2001 | WO | 0108951 A | 08-02-2001 |

EPO FORM P0461

Für nähere Einzelheiten zu diesem Anhang : siehe Amtsblatt des Europäischen Patentamts, Nr.12/82